# EUROPÄISCHE PATENTSCHRIFT

(11) **EP 1 761 697 B1**
(45) Veröffentlichungstag und Bekanntmachung des Hinweises auf die Patenterteilung: **24.11.2010**
(21) Anmeldenummer: 05761990.0
(22) Anmeldetag: 20.06.2005
(51) Int. Cl.: F02F 3/00

(54) **GEBAUTER KOLBEN FÜR EINEN VERBRENNUNGSMOTOR**
ASSEMBLED PISTON FOR AN INTERNAL COMBUSTION ENGINE
PISTON COMPOSE CONÇU POUR UN MOTEUR A COMBUSTION INTERNE

(30) Priorität: 22.06.2004 DE 102004030218
(43) Veröffentlichungstag der Anmeldung: 14.03.2007
(73) Patentinhaber: MAHLE GMBH, 70376 Stuttgart (DE)
(72) Erfinder: SCHARP, Rainer, 71665 Vaihingen (DE)
(74) Vertreter: Pohle, Reinhard
(86) Internationale Anmeldenummer: PCT/DE2005/001098
(87) Internationale Veröffentlichungsnummer: WO 2005/124137

(56) Entgegenhaltungen:
- WO-A-83/02300
- DE-A1- 2 212 922
- GB-A- 204 524
- SU-A1- 958 681
- PATENT ABSTRACTS OF JAPAN Bd. 010, Nr. 109 (M-472), 23. April 1986 (1986-04-23) & JP 60 240853 A (MITSUBISHI JIDOSHA KOGYO KK), 29. November 1985 (1985-11-29)
- PATENT ABSTRACTS OF JAPAN Bd. 013, Nr. 025 (M-787), 20. Januar 1989 (1989-01-20) & JP 63 235648 A (MAZDA MOTOR CORP), 30. September 1988 (1988-09-30)

## Beschreibung

Die Erfindung betrifft einen gebauten Kolben für einen Verbrennungsmotor nach dem Oberbegriff des Anspruches 1.

Gebaute Kolben, die aus einem Oberteil bestehen, mit dem mittels einer Außensechskantschraube ein Unterteil verschraubt ist , sind aus dem Stand der Technik allgemein bekannt und beispielsweise in der Veröffentlichung DE 32 49 290 T1 beschrieben. Hierbei liegt der Schraubenkopf der Außensechskantschraube üblicherweise auf der Kolbeninnenseite, was die Notwendigkeit mit sich bringt, das Oberteil mit einer Sacklochbohrung mit Innengewinde zu versehen, damit das Oberteil und das Unterteil miteinander verschraubt werden können. Dies hat den Nachteil, dass der Platzbedarf für die Sacklochbohrung ebenso wie für den Schraubenkopf relativ groß ist, sodass auch die Kompressionshöhe des Kolbens einen relativ großen Wert hat, und damit der gesamte Kolben eine ziemlich große axiale Gesamtlänge aufweist.

Hiervon ausgehend liegt der Erfindung das Problem zugrunde, die genannten Nachteile des Standes der Technik zu vermeiden und einen gebauten Kolben mit möglichst geringer Kompressionshöhe und möglichst geringer axialer Gesamtlänge zu schaffen.

Gelöst wird dieses Problem mit den im Kennzeichen des Hauptanspruches stehenden Merkmalen, wobei sich der zusätzliche Vorteil ergibt, dass die gemäß Erfindung verwendete Innensechskantschraube einen relativ großen, radialen Gewindedurchmesser aufweist, wodurch eine Verringerung der Gewindesteigung und damit eine Verbesserung der Festigkeit der Schraubverbindung erreicht wird. Zudem ergibt sich hierdurch eine Vergrößerung der tragenden Gewindefläche, was zu einer weiteren Verbesserung der Festigkeit der Schraubverbindung beiträgt, da hierdurch die Gefahr verringert wird, dass die Gewindeflanken sowohl der Schraube als auch der diese Schraube aufnehmenden Gewindebohrung abscheren.

Eine zweckmäßige Ausgestaltung der Erfindung ist Gegenstand des Unteranspruches, wobei des Kolbenunterteil einen tellerfederart elastisch verformbaren Bereich aufweist, in den das Gewinde für die Innensechskantschraube eingearbeitet ist, sodass hierdurch auf die Innensechskantschraube eine Vorspannung ausgeübt wird, die zu einer weiteren Verbesserung der Festigkeit der Schraubverbindung beiträgt.

Ein Ausführungsbeispiel der Erfindung wird im Folgenden anhand einer Zeichnung beschrieben. Sie zeigt einen aus einem Oberteil und einem Unterteil bestehenden, gebauten Kolben in einem aus zwei Hälften bestehenden Schnittbild, das zwei um 90° versetzte Längsschnitte des Kolbens zeigt.

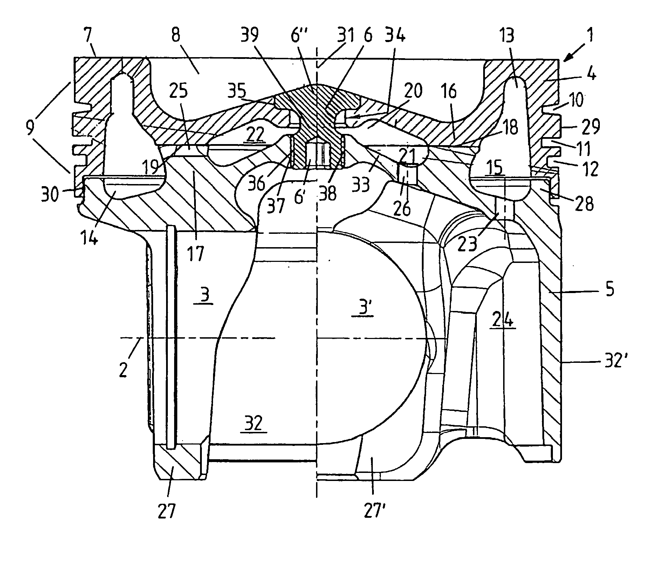

Die Figur zeigt einen gebauten Kolben 1 in einem Schnittbild, dessen linke Hälfte einen Schnitt durch den Kolben 1 entlang einer Längsachse 2 einer Nabenbohrung 3 und dessen rechte Hälfte einen um 90° dazu versetzten Schnitt durch den Kolben 1 zeigt. Der Kolben 1 besteht aus einem Oberteil 4 und einem Unterteil 5, die mittels eines mittig angeordneten Gewindestiftes 6 mit Innensechskant 6' und einem glatten Kopf 6" auf der dem Innensechskant 6' abgewandten Seite so miteinander verbunden sind, dass der Innensechskant 6' des Gewindestiftes 6 auf der Kolbeninnenseite zu liegen kommt. Der Kopf 6" des Gewindestiftes 6 hat hierbei einen größeren radialen Durchmesser als das Außengewinde 38. Zwischen dem Kopf 6" und dem Außengewinde 38 weist der Gewindestift 6 einen Dehnbereich 39 mit einem gegenüber dem Außengewinde 38 verringerte, radialen Duchmesser auf.

Hergestellt werden das Oberteil 4 und das Unterteil 5 des Kolbens 1 bevorzugterweise aus geschmiedetem Stahl. Es ist aber auch denkbar, das Oberteil 4 aus Stahl und das Unterteil 5 aus Aluminium beziehungsweise das Oberteil 4 aus geschmiedetem Aluminium und das Unterteil aus gegossenem Aluminium herzustellen.

Das zylinderförmige Oberteil 4 bildet den Kolbenboden 7, in den eine rotationssymmetrische Verbrennungsmulde 8 eingeformt ist. Die radial außen liegende Mantelfläche des Oberteiles 4 ist als Ringpartie 9 ausgebildet, die drei Ringnuten 10, 11 und 12 zur Aufnahme von in der Figur nicht dargestellten Kolbenringen aufweist. Die dem Kolbenboden 7 abgewandte Unterseite des Oberteils 4 weist radial außen eine umlaufende Ausnehmung 13 auf, die gemeinsam mit einer entsprechenden, kolbenbodenseitigen Ausnehmung 14 des Unterteils 5 einen ringförmigen, äußeren Kühlkanal 15 bildet, der radial außen von einer an den Kolbenboden 7 angeformten Ringwand 29 begrenzt wird..

Radial innen ist der äußere Kühlkanal 15 zum Teil von einem auf der Unterseite des Oberteils 4 angeordneten Ringflansch 16 und zum Teil von einer auf der Oberseite des Unterteils 5 angeordneten Ringrippe 17 begrenzt, wobei das Oberteil 4 und das Unterteil 5 des Kolbens 1 über den Ringflansch 16 und die Ringrippe 17 aufeinander aufliegen. Hierbei weisen der Ringflansch 16 eine erste Auflageflächen 18 und die Ringrippe 17 eine zweite Auflagefläche 19 auf, über welche Auflageflächen 18, 19 der Ringflansch 16 und die Ringrippe 17 in Kontakt zueinander stehen.

Radial innerhalb des Ringflansches 16 ist das Oberteil 4 auf seiner Unterseite mit einer weiteren, umlaufenden Ausnehmung 20 versehen, die mit einer entsprechenden, in die Oberseite des Unterteiles 5 eingeformten, weiteren Ausnehmung 21 einen inneren, ringförmigen Kühlkanal 22 bildet. Hierbei ist der äußere Kühlkanal 15 über eine Ölzulauföffnung 23 mit dem Kolbeninnenraum 24 und über einen Ölkanal 25 mit dem inneren Kühlkanal 22 verbunden. Über eine Ölablauföffnung 26 ist der innere Kühlkanal 22 mit dem Kolbeninnenraum 24 verbunden. Zum Kühlen des Kolbens 1 wird Öl über eine in der Figur nicht dargestellte Ölzulauföffnung in den äußeren Kühlkanal 15 eingespritzt, gelangt nach einiger Zeit über den Ölkanal 25 in den inneren Kühlkanal 22 und läuft über die Ölablauföffnungen 23 und 26 wieder zurück in den Kolbeninnenraum 24.

Das Unterteil 5 des Kolbens 1 besteht aus zwei einander gegenüberliegenden, im Schnitt trapezförmigen Bolzennaben 27, 27' mit je einer Bolzenbohrung, 3, 3', die in einem derartigen Abstand zueinander angeordnet sind, dass dazwischen das Oberteil eines (in der Figur nicht dargestellten) Pleuels Platz findet. Weiterhin weist das Unterteil 5 die Bolzennaben 27, 27' miteinander verbindende Schaftelemente 32, 32' auf. Kolbenbodenseitig weist das Unterteil 5 radial außen einen umlaufenen im Schnitt rechteckförmigen Kragen 28 auf, der in eine auf der kolbenbodenab-gewandten Stirnseite der Ringwand 29 radial innen angeordneten Ausnehmung 30 passt, sodass bei der Montage des Kolbens 1 das Unterteil 5 über den Kragen 28 und die Ausnehmung 30 geführt und relativ zum Oberteil 4 zentriert wird.

Auf der kolbenbodenseitigen Oberfläche des Unterteils 5 schließt sich nach radial innen an den Kragen 28 die Ausnehmung 14, die mit der Ausnehmung 13 des Oberteiles 4 den äußeren Kühlkanal 15 bildet, die Ringrippe 17 und die weitere Ausnehmung 21 an, die mit der weiteren Ausnehmung 20 des Oberteiles 4 den inneren Kühlkanal 22 bildet. Hierbei ist die Ausnehmung 21 so weit in das Kolbenunterteil 5 eingearbeitet, dass ein dünnwandiger Bereich 33 zwischen Kolbeninnenraum 24 und Ausnehmung 21 entsteht, der tellerfederartig elastisch ausgebildet ist.

Koaxial zur Achse 31 des Kolbens 1 ist in den Kolbenboden 7 eine durchgehende Bohrung 34 mit einem Durchmesser eingebracht, der etwas größer ist als der Durchmesser des Außengewindes 38 des Gewindestiftes 6. Die Bohrung 34 weist eine kolbenbodenseitig angeordnete, umlaufende Ausnehmung 35 mit einem radialen Durchmesser auf, der um ein geringes Toleranzmaß größer ist, als der radiale Durchmesser des Kopfes 6" des Gewindestiftes 6, und dessen Querschnitt insoweit dem Querschnitt des Kopfes 6" entspricht, dass beim Verschrauben des Oberteiles 4 mit dem Unterteil 5 die Ausnehmung 35 der Aufnahme des Kopfes 6" des Gewindestiftes 6 dienen kann.

In die Oberseite des Unterteils 5, d.h., in den elastisch nachgiebigen Bereich 33 ist eine Durchgangsbohrung 36 mit einem Innengewinde 37 eingearbeitet, das derart ausgebildet ist, das der Gewindestift 6 über sein Außengewinde 38 in die Durchgangsbohrung 36 einschraubbar ist.

Zum Verschrauben wird zunächst das Oberteil 4 so auf das Unterteil 5 aufgesetzt, dass Ober- und Unterteil des Kolbens 1 in einer bestimmten Stellung zueinander angeordnet sind. Anschließend wird der Gewindestift 6 von oben her in die Bohrung 34 des Oberteiles 4 eingeführt und von unten mittels eines Sechskanteisens in der mit dem Innengewinde 37 versehenenen Durchgangsbohrung 36 festgeschraubt. Die sich hierbei ergebende tellerfederartige Verformung des Bereiches 33 beidseitig der Durchgangsbohrung 36 erhöht die auf den Gewindestift 6 wirkende Vorspannung und führt dadurch zu einer Verbesserung der Festigkeit der Schraubverbindung.

Eine weitere Verbesserung der Festigkeit der Schraubverbindung ergibt sich auch dadurch, dass das Außengewinde 38 des Gewindesstiftes 6 konstruktionsbedingt einen größeren axiale Durchmesser aufweist, als eine hierbei üblicherweise verwendete Außensechskantschraube mit Schraubenkopf und Schraubenschaft. Bei gleichbleibender Anzahl von Windungen pro Schraubenlänge führt eine Vergrößerung des radialen Gewindedurchmessers zu einer Verringerung der Gewindesteigung. Da allgemein die Festigkeit einer Schraubverbindung umso größer ist, je geringer die Steigung eines Gewindes ist, ergibt sich hierdurch die weitere Verbesserung der Festigkeit der erfindungsgemäßen Schraubverbindung.

Darüberhinaus bedeutet eine Vergrößerung des radialen Gewindedurchmessers auch eine Vergrößerung der tragenden Gewindeflächen sowohl der Schraube als auch der die Schraube aufnehmenden Gewindebohrung. Dadurch wird die Gefahr verringert, dass bei einer größeren Belastung des Kolbens die Gewindeflächen abscheren, wodurch hierbei größere Kolben- und Motorschäden vermieden werden.

### Bezugszeichenliste

- 1: Kolben
- 2: Längsachse
- 3, 3': Nabenbohrung
- 4: Oberteil
- 5: Unterteil
- 6: Schraube; Gewindestift mit einem
- 6': Innensechskant und einem
- 6": Kopf auf der dem Innensechskant 6' abgewandten Seite
- 7: Kolbenboden
- 8: Verbrennungsmulde
- 9: Ringpartie
- 10, 11, 12: Ringnut
- 13, 14: Ausnehmung
- 15: äußerer Kühlkanal
- 16: Ringflansch
- 17: Ringrippe
- 18: 1. Auflagefläche
- 19: 2. Auflagefläche
- 20, 21: Ausnehmung
- 22: innerer Kühlkanal
- 23: Ölablauföffnung
- 24: Kolbeninnenraum
- 25: Ölkanal
- 26: Ölablauföffnung
- 27, 27': Bolzennabe
- 28: Kragen
- 29: Ringwand
- 30: Ausnehmung
- 31: Achse des Kolbens 1
- 32, 32': Schaftelement
- 33: Bereich zwischen dem Kolbeninenraum 24 und der Ausnehmung 21
- 34: Bohrung
- 35: Ausnehmung
- 36: Durchgangsbohrung
- 37: Innengewinde
- 38: Außengewinde des Gewindestiftes 6
- 39: Dehnbereich des Gewindestiftes 6

## Patentansprüche

1. Gebauter Kolben (1) für einen Verbrennungsmotor
- bestehend aus einem den Kolbenboden (7) bildenden Oberteil (4) mit einer Verbrennungsmulde (8),
= mit einer auf der kolbenbodenabgewandten Unterseite angeordneten und drehsymmetrisch zur Kolbenlängsachse (31) umlaufenden Ausnehmung (20), und
- bestehend weiterhin aus einem Unterteil (5), das mit Hilfe einer koaxial zur Kolbenachse (31) angeordneten Schraube (6) mit dem Oberteil (4) verschraubt ist,
= mit zwei auf der Unterseite im Abstand zueinander angeordneten Bolzennaben (27, 27') mit je einer Nabenbohrung (3, 3'),
= mit die Bolzennaben (27, 27') miteinander verbindenden Schaftelementen (32, 32'), und
= mit einer auf der Oberseite angeordneten und drehsymmetrisch zur Kolbenlängsachse (31) umlaufenden Ausnehmung (21), die mit der Ausnehmung (20) des Oberteils (4) einen inneren Kühlkanal (22) bildet,
**dadurch gekennzeichnet,**
- **dass** koaxial zur Kolbenachse (31) in das Oberteil (4) eine duchgehende Bohrung (34) mit einer umlaufende, kolbenbodenseitigen Ausnehmung (35) eingebracht ist, die gegenüber der Bohrung (34) einen größeren, radialen Durchmesser aufweist,
- **dass** koaxial zur Kolbenachse (31) in das Unterteil (5) eine Durchgangsbohrung (36) mit Innengewinde (37) eingebracht ist, deren radialer Durchmesser geringfügig kleiner als der Durchmesser der durchgehenden Bohrung (34) ist, und
- **dass** die Schraube als Gewindestift (6) mit einem zum Innengewinde (37) identischen Außengewinde (38), mit einem Innensechskant (6') auf der Kolbeninnenseite und mit einem Kopf (6") mit einer zur Ausnehmung (35) komplementären Form auf der Kolbenbodenseite derart ausgebildet ist, dass der Kopf (6") einen Teil des Bodens der Verbrennungsmulde (8) bildet und im verschraubten Zustand mit dem Boden der Verbrennungsmulde (8) bündig abschließt.

2. Gebauter Kolben nach Anspruch 1, **dadurch gekennzeichnet, dass** die Ausnehmung (21) so weit in das Kolbenunterteil (5) eingearbeitet ist, dass ein dünnwandiger Bereich (33) zwischen Kolbeninnenraum (24) und Ausnehmung (21) entsteht, der tellerfederartig elastisch verformbar ist und die Durchgangsbohrung (36) mit dem Innenngewinde (37) aufweist.

## Claims

1. An assembled piston (1) for an internal combustion engine,
- comprising an upper part (4) forming the piston head (7) and having a combustion cavity (8),
= with a recess (20) arranged at the bottom facing away from the piston head and rotating symmetrically in reference to the longitudinal piston axis (31), and
- further comprising a lower part (5) that is screwed to the upper part (4) via a screw (6) arranged coaxially in reference to the piston axis (31),
= with two bolt hubs (27, 27'), having one hub bore (3, 3') each, being arranged at the bottom at a distance from each other,
= with shaft elements (32, 32') connecting the bolt hubs (27, 27') to each other, and
= with a recess (21) arranged at the upper side and rotating symmetrically in reference to the longitudinal piston axis (31), together with the recess (20) of the upper part (4) forming an inner cooling channel (22),
**characterized in**
- **that** a continuous bore (34) with a circumferential recess (35) at the side of the piston head being inserted in the upper part (4) coaxially in reference to the piston axis (31), which has a greater radial diameter in reference to the bore (34),
- **that** a continuous bore (36) with an internal thread (37) is inserted in the lower part (5) coaxially in reference to the piston axis (31), with its radial diameter being slightly smaller than the diameter of the continuous bore (34), and
- **that** the screw is embodied as a threaded pin (6) having an external thread (38) identical to the internal thread (37), having an internal hexagon socket (6') at the inner side of the piston, and having a head (6") with a shape complementary to the recess (35) at the side of the piston head such that the head (6") forms one part of the bottom of the combustion cavity (8) and ends flush with the bottom of the combustion cavity (8) when screwed in.

2. An assembled piston according to claim 1, **characterized in that** the recess (21) is integrated in the lower part of the piston (5) such that a thin-walled section (33) develops between the interior space of the piston (24) and the recess (21), which can be elastically deformed like a disk spring and with the continuous bore (36) comprising an internal thread (37).

## Revendications

1. Piston assemblé (1) pour un moteur à combustion interne
- composé d'une partie supérieure (4) dotée d'une cuvette de combustion (8) et constituant la tête de piston (7),
= avec un évidement (20) agencé sur la face inférieure opposée à la tête de piston et circonférentiel avec symétrie de rotation par rapport à l'axe longitudinal (31) du piston, et
- comprenant également une partie inférieure (5) qui est vissée sur la partie supérieure (4) au moyen d'une vis (6) agencée de manière coaxiale par rapport à l'axe de piston (31),
= avec deux moyeux formant axe (27, 27') présentant respectivement un alésage de moyeu (3, 3'), agencés sur la face inférieure à une certaine distance l'un de l'autre,
= avec des éléments formant fût (32, 32') reliant entre eux les moyeux formant axe (27, 27'), et
= avec un évidement (21), agencé sur la face supérieure et circonférentiel avec symétrie de rotation par rapport à l'axe longitudinal (31) du piston, qui forme un canal de refroidissement intérieur (22) en commun avec l'évidement (20) de la partie supérieure (4),
**caractérisé en ce que**,
- un alésage traversant (34), qui présente un diamètre radial supérieur par rapport à l'alésage (34), avec un évidement (35) circonférentiel côté tête de piston, est réalisé dans la partie supérieure (4) de manière coaxiale par rapport à l'axe de piston (31),
- un trou de passage (36), dont le diamètre radial est légèrement inférieur au diamètre de l'alésage traversant (34), et comprenant un filetage intérieur (37), est réalisé dans la partie inférieure (5) de manière coaxiale par rapport à l'axe du piston (31), et
- la vis est conçue en tant que tige filetée (6) avec un filetage extérieur (38) identique au filetage intérieur (37), avec un hexagone intérieur (6') sur le côté intérieur de piston et avec une tête (6") ayant une forme complémentaire de l'évidement (35) sur le côté tête de piston, de manière à ce que la tête (6") forme une partie du fond de la cuvette de combustion (8) et termine de manière jointive, à l'état vissé, le fond de la cuvette de combustion (8).

2. Piston assemblé selon la revendication 1, **caractérisé en ce que** l'évidement (21) est réalisé dans la partie inférieure de piston (5) de manière suffisante pour qu'un secteur (33) à paroi mince entre la chambre intérieure de piston (24) et l'évidement (21) en résulte, qui peut être déformé élastiquement à la manière d'un ressort à disque et présente le trou de passage (36) avec le filetage intérieur (37).
